# FASCICULE DE BREVET EUROPEEN

(11) **EP 1 161 023 B1**
(45) Date de publication et mention de la délivrance du brevet: **05.10.2005**
(21) Numéro de dépôt: 01460033.2
(22) Date de dépôt: 11.05.2001
(51) Int. Cl.: H04L 1/18, H04L 1/00

(54) **Procédé et système de transmission de données bi-mode, émetteur et récepteur correspondants**
System und Verfahren zur Datenübertragung in zwei Moden und entsprechender Sender und Empfänger
System and method to transmit data in two modes and corresponding transmitter and receiver

(30) Priorité: 31.05.2000 FR 0007056
(43) Date de publication de la demande: 05.12.2001
(73) Titulaire: Mitsubishi Electric Information Technology Centre Europe B.V., 35708 Rennes Cédex 7 (FR)
(72) Inventeur: Rosier, Corinne, 35830 Betton (FR); Pitcho, Francis, 35700 Rennes (FR)
(74) Mandataire: Vidon, Patrice

(56) Documents cités:
- EP-A- 0 866 579
- GB-A- 1 428 050

## Description

Le domaine de l'invention est celui de la transmission de données d'un émetteur vers un récepteur. Plus précisément, l'invention concerne tous les systèmes de communication requérant une qualité de transmission élevée, et dans lesquels l'utilisation de la bande passante doit être optimisée. L'invention est particulièrement adaptée aux systèmes de radiocommunication, dans lesquels la ressource radio est une ressource rare, et où le canal de transmission est sujet à perturbations.

L'invention s'applique notamment, mais non exclusivement, aux protocoles de transmission du type ARQ (en anglais « Automatic Repeat Request »), qui mettent en oeuvre des fonctions de contrôle d'erreurs au sein des systèmes de communication.

De nombreuses techniques de contrôle d'erreur sont généralement utilisées dans les systèmes de communication, pour compenser la perte et/ou la dégradation des données transmises d'un point source vers un point destination. De manière classique, le contrôle d'erreur met en oeuvre une détection des erreurs de transmission, et une retransmission des données perdues ou détériorées. Un protocole du type ARQ permet de gérer simultanément le contrôle des erreurs et le contrôle du flux de données, en régulant le flux des données émises, et en déterminant si une ou plusieurs données doivent être retransmises.

On connaît plusieurs protocoles du type ARQ, tels que les protocoles de type Go-Back-N, les protocoles de type Stop-and-Wait ou encore les protocoles de type Selective Repeat. Dans les protocoles du type Go-Back-N et Selective Repeat, qui sont parmi les protocoles de type ARQ les plus couramment employés, on insère un identifiant, généralement appelé numéro de séquence, dans chaque paquet de données échangées par les terminaux de type ARQ. Par paquet de données, on entend ici, et dans toute la suite du document, un ensemble d'une ou plusieurs données, telle que, par exemple, une unité de données du protocole (en anglais, PDU « Protocol Data Unit »), ou encore une trame de données.

L'émetteur ARQ maintient une liste des numéros de séquence des PDUs qu'il est autorisé à transmettre. De son côté, le récepteur ARQ maintient une liste des numéros de séquence des PDUs qu'il est préparé à recevoir. La connaissance du numéro de séquence des PDUs permet ainsi au récepteur ARQ de détecter la perte ou la détérioration de certains paquets de données, et de signaler ces erreurs de transmission à l'émetteur ARQ, qui retransmet alors le ou les PDU(s) qui n'avai(en)t pas été correctement reçu(s).

Un inconvénient de cette technique de l'art antérieur est que, lorsque la transmission de données s'effectue sans erreur, il est inutile de transmettre les identifiants des paquets de données. En effet, dans les protocoles du type Go-Back-N et Selective Repeat, par exemple, la transmission des numéros de séquence associés aux PDUs consomme inutilement de la bande passante, dans le cas notamment où le canal de transmission n'est pas perturbé.

Un autre inconvénient de cette technique de l'art antérieur est qu'elle est donc coûteuse, dans le cas où les identifiants des paquets de données sont transmis inutilement.

Un autre inconvénient de cette technique de l'art antérieur est que, lorsqu'il n'est pas utile de transmettre les identifiants des paquets de données, l'espace qu'ils occupent au sein des paquets pourrait être utilisé à d'autres fins, telles que la correction d'erreurs sans voie de retour par exemple (FEC, en anglais "Forward Error Correction").

GB 1 428 050 décrit un système de transmission de données dont des identifiants des bloques à transmettre sont seulement utilisés pour synchroniser le transmetteur et le récepteur en cas de transmission de données avec erreur.

L'invention a notamment pour objectif de pallier ces inconvénients de l'art antérieur.

Plus précisément, un objectif de l'invention est de fournir un procédé de transmission de données qui soit simple et peu coûteux à mettre en oeuvre.

Un autre objectif de l'invention est de mettre en oeuvre un procédé de transmission de données permettant d'éviter, dans certaines conditions, de transmettre un identifiant du paquet envoyé.

L'invention a encore pour objectif de fournir un procédé de transmission de données permettant d'économiser de la bande passante par rapport aux autres procédés de transmission connus.

L'invention a également pour objectif de mettre en oeuvre un procédé de transmission de données applicable dans le cadre d'un protocole du type ARQ.

Encore un autre objectif de l'invention est de fournir un procédé de transmission de données permettant d'effectuer une correction d'erreurs sans voie de retour.

Ces objectifs, ainsi que d'autres qui apparaîtront par la suite sont atteints selon l'invention, à l'aide d'un procédé de transmission de données entre au moins un émetteur et au moins un récepteur, sous forme de paquets d'au..moins une donnée, chacun desdits paquets de données étant associé à un identifiant dudit paquet.

Un tel procédé met en oeuvre au moins deux modes de transmission :
- un mode explicite, dans lequel chacun desdits paquets de données, dits paquets explicites, est transmis avec ledit identifiant dudit paquet de données ;
- un mode implicite, dans lequel lesdits paquets de données, dits paquets implicites, sont transmis sans être accompagnés desdits identifiants,
et comprend au moins une étape de passage (24 ; 14) dudit mode explicite audit mode implicite et/ou au moins une étape de passage (23 ; 13) dudit mode implicite audit mode explicite, en fonction d'au moins un critère de passage prédéterminé. En outre, selon un tel procédé, ledit récepteur gère au moins un indicateur de qualité de transmission, et le passage dudit récepteur dudit mode explicite audit mode implicite est déclenché par la réception d'un paquet implicite, à condition que la valeur dudit au moins un indicateur soit supérieure à un seuil de qualité prédéterminé.

Ainsi, l'invention repose sur une approche tout à fait nouvelle et inventive de la transmission de données entre un émetteur et un récepteur. En effet, elle repose notamment sur l'existence de deux modes de transmission distincts, qui sont sélectivement mis en oeuvre en fonction de critères prédéterminés, liés par exemple à la qualité du canal établi entre le récepteur et l'émetteur, ou à l'importance des perturbations qui se superposent aux données transmises. En outre, le passage, côté récepteur, du mode de transmission explicite au mode implicite est optimisé par la gestion d'un indicateur de qualité de transmission.

Un système comprenant au moins un émetteur et au moins un récepteur, dans lequel est mis en oeuvre un tel procédé selon l'invention, est donc particulièrement adaptable aux conditions environnementales de transmission de données. Notamment, un tel procédé de transmission de données bi-mode est particulièrement économique en termes de bande passante, les identifiants des paquets de données pouvant ou non être transmis, selon des critères prédéterminés, liés notamment à la valeur de l'indicateur de qualité de transmission.

Préférentiellement, ledit au moins un indicateur de qualité de transmission est un drapeau d'erreur relatif à ladite transmission de données.

Avantageusement, ledit drapeau d'erreur peut prendre au moins deux états :
- un état « levé » après que ledit récepteur (2) reçoit un message d'erreur, ledit état "levé" signifiant que la condition selon laquelle la valeur dudit au moins un indicateur est supérieure audit seuil de qualité prédéterminé n'est pas vérifiée ;
- un état « abaissé » après que ledit récepteur reçoit correctement un paquet explicite, ledit état "abaissé" signifiant que la condition selon laquelle la valeur dudit indicateur est supérieure audit seuil de qualité prédéterminé est vérifiée.

Un tel message d'erreur peut, par exemple, provenir des couches basses du système de transmission de données auquel appartient le récepteur. En effet, de telles couches basses sont capables de détecter des erreurs de transmission, et donc de déterminer quand un paquet de données envoyé par un émetteur n'a pas été reçu ou a été mal reçu par le récepteur, selon une technique qui ne fait pas l'objet de cette invention. On peut bien sûr également envisager qu'un message d'erreur soit envoyé par les couches basses au récepteur pour une raison autre qu'une erreur de transmission.

Selon une technique avantageuse de l'invention, le passage dudit récepteur (2) dudit mode implicite audit mode explicite (23) est déclenché par la réception d'un paquet explicite et/ou d'un message d'erreur.

Ainsi, la réception d'un paquet de données explicite force le récepteur à passer du mode implicite au mode explicite. Le passage du mode implicite au mode explicite, côté récepteur, peut aussi être déclenché par la réception d'un message d'erreur, en provenance, par exemple, des couches basses, à la détection d'une erreur de transmission.

Selon une caractéristique avantageuse de l'invention, ledit récepteur maintient en outre au moins l'une des variables appartenant au groupe comprenant :
- des variables relatives auxdits identifiants desdits paquets reçus ;
- des variables d'état relatives à un protocole mis en oeuvre.

Ainsi, le récepteur peut maintenir une variable correspondant à l'identifiant (ou numéro de séquence) des paquets reçus. Une telle variable peut être utilisée pour détecter les paquets de données perdus ou endommagés au cours de la transmission, dans le cas notamment ou le récepteur met en oeuvre un protocole du type ARQ. Le récepteur peut alors également maintenir des variables d'état relatives au protocole ARQ mis en oeuvre, telles qu'une variable de fenêtre ARQ par exemple.

Selon une première variante avantageuse de l'invention, ledit récepteur étant en mode explicite, ledit drapeau d'erreur étant levé, ledit récepteur refuse tous les paquets implicites reçus.

En effet, lorsque le récepteur est en mode explicite et qu'il a reçu un message d'erreur, il ne peut pas attribuer un identifiant à un paquet de données implicite reçu. Il refuse donc tous les paquets implicites reçus. Par ailleurs, si le procédé de transmission met en oeuvre un protocole de type ARQ, de tels paquets implicites refusés ne sont pas utilisés par le protocole.

Selon une seconde variante avantageuse de l'invention, ledit récepteur étant en mode explicite et recevant au moins un paquet implicite, ledit drapeau d'erreur étant levé, ledit récepteur met en oeuvre les étapes successives suivantes :
- ledit récepteur stocke, selon un ordre de stockage séquentiel, ledit au moins un paquet implicite reçu ;
- si ledit drapeau d'erreur reste dans l'état « levé », ledit récepteur rejette ledit au moins un paquet implicite stocké ;
- si ledit drapeau d'erreur passe dans l'état « abaissé », ledit récepteur traite ledit au moins un paquet implicite stocké, et lui attribue l'identifiant qui précède séquentiellement ledit identifiant dudit paquet explicite reçu, s'il s'agit du premier paquet implicite stocké, ou l'identifiant qui précède séquentiellement l'identifiant du paquet implicite précédemment stocké selon ledit ordre de stockage séquentiel.

Ainsi, lorsque le récepteur est en mode explicite et que le drapeau d'erreur est levé, il stocke les paquets implicites qu'il reçoit, selon un ordre de stockage séquentiel, sans déterminer leur identifiant. De tels paquets implicites sont alors dits "en attente de séquencement". À la réception d'un paquet explicite d'identifiant N, le drapeau d'erreur passe alors dans l'état abaissé, et le récepteur traite alors les paquets "en attente de séquencement", en attribuant à chacun un identifiant de la manière suivante (par souci de simplification, on suppose ici que l'identifiant est un numéro de séquence) : le dernier paquet implicite reçu et stocké par le récepteur se voit attribuer l'identifiant N-1, l'avant-dernier paquet implicite reçu reçoit l'identifiant N-2, et ainsi de suite jusqu'à ce que tous les paquets implicites stockés par le récepteur aient été traités.

Dans le cas particulier où l'identifiant doit être compris entre une valeur minimale SN_Min et une valeur maximale SN_Max prédéterminées, les identifiants sont attribués aux paquets implicites stockés modulo SN_Max+1.

Si le procédé met en oeuvre un protocole de type ARQ, les paquets implicites stockés sont ensuite utilisés par le protocole, après avoir reçu leur identifiant.

En revanche, si le récepteur a stocké des paquets implicites et qu'il reçoit un nouveau message d'erreur (le drapeau d'erreur reste alors dans l'état levé), il rejette tous les paquets implicites stockés, sans les avoir traités.

Si le récepteur ne reçoit ni nouveau message d'erreur, ni paquet explicite, on peut aussi envisager qu'il rejette les paquets implicites stockés après un temps prédéterminé, ou, par exemple, lorsqu'une capacité maximale de stockage des paquets implicites est atteinte.

Un telle variante permet au récepteur de ne pas refuser les paquets implicites reçus après la réception d'un message d'erreur, mais de les stocker jusqu'à la réception du prochain message d'erreur, ou du prochain paquet explicite. On peut donc envisager, pour mettre en oeuvre une telle variante, que l'émetteur, étant en mode implicite, passe en mode explicite à intervalles de temps prédéterminés, pour envoyer un ou plusieurs paquets explicites au récepteur, de manière à permettre au récepteur de traiter les paquets implicites stockés.

Le premier paquet de données envoyé par l'émetteur après le passage du mode implicite au mode explicite doit alors être le paquet de données dont l'identifiant suit directement l'identifiant du dernier paquet de données envoyé en mode implicite, de façon à ce que les identifiants attribués aux paquets implicites stockés par le récepteur soient corrects. L'émetteur, après avoir envoyé un ou plusieurs paquets explicites, repasse ensuite en mode implicite.

Selon une technique avantageuse de l'invention, ledit récepteur ayant correctement reçu un paquet de données, il envoie audit émetteur au moins un message d'acquittement classique dudit paquet reçu, contenant ledit identifiant dudit prochain paquet de données attendu par ledit récepteur, et, dans au moins certains cas, ledit récepteur, préalablement audit envoi dudit au moins un message d'acquittement classique, envoie audit émetteur au moins un message d'acquittement anticipé.

Un message d'acquittement classique contient un champ dont la valeur permet de déterminer l'identifiant du prochain paquet de données attendu par le récepteur. Ainsi, dans le cas où l'identifiant est un numéro de séquence par exemple, la réception par l'émetteur d'un message d'acquittement portant la valeur N indique que tous les paquets de données de numéro de séquence inférieur à N ont été correctement reçus par le récepteur, et que le paquet de données d'identifiant N n'a pas été reçu par le récepteur, ou a été endommagé au cours de la transmission.

Selon le protocole mis en oeuvre, le récepteur peut envoyer un message d'acquittement à la réception d'un paquet de données, ou envoyer des messages d'acquittement à intervalles de temps prédéterminés par exemple. L'envoi d'un message d'acquittement peut aussi être retardé jusqu'à ce que le récepteur ait reçu un nombre de paquets de données prédéterminé, ou peut être retardé par les couches basses du système de transmission de données, par exemple s'il n'y a pas de ressources disponibles pour le transmettre.

On peut aussi envisager que le récepteur envoie plusieurs messages d'acquittement consécutifs à l'émetteur, en cas d'erreur de transmission par exemple. Ainsi, même en cas de perte ou de détérioration des messages d'acquittement, on accroît la probabilité d'indiquer à l'émetteur qu'un ou plusieurs paquets de données ont été perdus ou endommagés. L'émetteur étant informé plus rapidement d'une éventuelle erreur de transmission, la période pendant laquelle l'émetteur et le récepteur sont désynchronisés est ainsi réduite, et on peut revenir plus rapidement à un mode de fonctionnement sans erreur.

Avantageusement, ledit émetteur maintient au moins l'une des variables appartenant au groupe comprenant :
- des variables relatives aux identifiants d'au moins certains desdits paquets transmis ;
- pour chacun desdits paquets transmis, une horloge pouvant prendre au moins trois états :
   - un état « en cours », après l'envoi dudit paquet transmis ;
   - un état « stoppée », après la réception d'un message d'acquittement dudit paquet transmis ;
   - un état « expirée », après un temps maximum prédéterminé ;
- des variables d'état relatives à un protocole mis en oeuvre.

À chaque paquet qu'il reçoit des couches supérieures du système de transmission de données, l'émetteur associe un identifiant, qui peut être un numéro de séquence par exemple. Ce numéro de séquence est compris entre une valeur minimale SN_Min, qui peut par exemple être égale à zéro, et une valeur maximale SN_Max. L'émetteur maintient donc les variables correspondant à l'identifiant du paquet reçu des couches supérieures, SN_Min et SN_Max. En outre, l'émetteur peut maintenir des variables relatives au protocole mis en oeuvre, telles que des variables de fenêtre ARQ par exemple.

L'émetteur peut également maintenir une variable d'horloge, pour chacun des paquets de données qu'il transmet au récepteur. Lorsqu'un paquet de données est envoyé vers le récepteur (par exemple un paquet dont le numéro de séquence est N), l'horloge correspondante passe dans l'état "en cours". En cas de réception d'un message d'acquittement, indiquant directement ou indirectement, que le paquet auquel l'horloge est associée a été correctement reçu par le récepteur, l'horloge passe dans l'état "stoppée".

Un tel message d'acquittement peut être un message indiquant que le prochain paquet attendu par le récepteur est le paquet d'identifiant N+1, ou un message indiquant que le prochain paquet attendu par le récepteur est un paquet d'identifiant N+M, avec M>1, qui assure l'émetteur que tous les paquets d'identifiant inférieur à N+M ont été correctement reçus. En cas de non réception d'un message d'acquittement, l'horloge passe dans l'état "expirée" après un temps maximum prédéterminé.

Par exemple, un tel temps maximum prédéterminé, appelé RTT (en anglais "Round Trip Time"), est constitué de la somme des temps suivants :
- le temps nécessaire à l'émetteur pour envoyer un paquet de données ;
- le temps nécessaire au récepteur pour recevoir et traiter le paquet de données envoyé ;
- le temps nécessaire au récepteur pour envoyer une réponse à l'émetteur (par exemple, un message d'acquittement), en supposant que le récepteur envoie cette réponse dès que possible ;
- le temps nécessaire à l'émetteur pour traiter la réponse du récepteur.

De façon avantageuse, le passage dudit émetteur dudit mode explicite audit mode implicite est déclenché par un événement interne et/ou externe audit émetteur, si au moins un paquet explicite a été envoyé par ledit émetteur depuis le dernier passage dudit émetteur dudit mode implicite audit mode explicite.

Lorsqu'il passe en mode implicite, l'émetteur envoie des paquets implicites dans l'ordre de leurs identifiants et sans duplication, en commençant par le paquet implicite dont l'identifiant suit l'identifiant du dernier paquet envoyé en mode explicite.

Selon une caractéristique avantageuse de l'invention, ledit émetteur maintient en outre au moins l'une des variables appartenant au groupe comprenant :
- une première variable d'identification, appelée EoW, dont la valeur est un identifiant dudit prochain paquet à transmettre ;
- une seconde variable d'identification, appelée BoW, dont la valeur est le plus petit desdits identifiants desdits paquets transmis, pour lesquels ledit émetteur n'a pas reçu de message d'acquittement, ledit identifiant étant un numéro, attribué séquentiellement à chacun desdits paquets de données.

Avantageusement, ledit identifiant est un numéro, attribué séquentiellement à chacun desdits paquets de données, et ledit événement est constitué de la combinaison des conditions suivantes :
- ledit émetteur reçoit un message d'acquittement contenant l'identifiant N dudit prochain paquet de données attendu par ledit récepteur ;
- ladite horloge de chacun desdits paquets d'identifiants SN transmis par ledit émetteur est soit dans ledit état « en cours », soit dans ledit état « stoppée », SN étant supérieur ou égal à N, et SN étant strictement inférieur à l'identifiant dudit prochain paquet à transmettre (EoW).

En effet, la réception d'un message d'acquittement contenant l'identifiant N indique à l'émetteur que tous les paquets d'identifiant inférieur ou égal à N-1 ont été correctement reçu par le récepteur. Si, par ailleurs, pour tous les paquets transmis par l'émetteur ultérieurement au paquet d'identifiant N-1, les horloges sont dans l'état "stoppée" (l'émetteur a alors reçu un message d'acquittement indiquant que le paquet correspondant a été correctement reçu) ou dans l'état "en cours" (l'émetteur est en attente d'un message d'acquittement pour ce paquet), l'émetteur est assuré qu'il n'y a pas eu d'erreur de transmission pour tous les paquets de données envoyés plus d'un RTT (en anglais "Round Trip Time") avant la réception du message d'acquittement contenant l'identifiant N.

L'émetteur peut alors passer en mode implicite, car la liaison entre l'émetteur et le récepteur semble être de bonne qualité.

Selon un premier mode de réalisation avantageux de l'invention, ledit identifiant est un numéro, attribué séquentiellement à chacun desdits paquets de données, et le passage dudit émetteur dudit mode implicite audit mode explicite est déclenché par la réception d'un message d'acquittement contenant l'identifiant N dudit prochain paquet de données attendu par ledit récepteur, si les deux conditions suivantes sont vérifiées :
- ledit émetteur a transmis au moins un paquet d'identifiant SN, avec SN supérieur ou égal à N, et SN strictement inférieur à l'identifiant dudit prochain paquet à transmettre ;
- ladite horloge de l'un au moins desdits paquets d'identifiant SN est dans ledit état « expirée ».

De telles circonstances signalent à l'émetteur une erreur de transmission probable du paquet d'identifiant N. En effet, l'horloge du paquet d'identifiant SN étant dans l'état "expirée", on sait que le temps qui s'est écoulé depuis l'émission d'un tel paquet est supérieur au temps maximum prédéterminé RTT. Dans l'absence de toute erreur de transmission, le récepteur aurait donc déjà envoyé à l'émetteur un message d'acquittement contenant l'identifiant SN+1, et indiquant que tous les paquets d'identifiant inférieur ou égal à SN ont été correctement reçus.

Ayant connaissance d'une telle erreur de transmission, l'émetteur passe alors en mode explicite.

En mode explicite, l'émetteur peut envoyer tout paquet d'identifiant N, autorisé par le protocole mis en oeuvre dans le système de transmission de données, selon l'invention. Notamment, l'émetteur peut envoyer des paquets de données sans respecter l'ordre de leurs identifiants et/ou dupliquer certains paquets de données.

Selon un second mode de réalisation avantageux de l'invention, ledit identifiant est un numéro, attribué séquentiellement à chacun desdits paquets de données, et le passage dudit émetteur dudit mode implicite audit mode explicite est déclenché par le passage de ladite horloge d'un paquet d'identifiant SN dans ledit état « expirée », SN étant supérieur ou égal à ladite seconde variable d'identification BoW, et strictement inférieur à ladite première variable d'identification EoW.

Ainsi, selon ce second mode de réalisation de l'invention, la transition du mode implicite au mode explicite est déclenchée par l'expiration d'une horloge, même si aucun message d'acquittement n'a encore été reçu par l'émetteur. Un tel mode de réalisation permet, d'une part, d'obtenir une plus grande réactivité du système de transmission de données à l'apparition d'erreurs, et d'autre part, d'éviter que des paquets implicites soient inutilement rejetés par le récepteur.

En effet, à la réception d'un message d'erreur, le récepteur est passé en mode explicite, et se trouve donc désynchronisé de l'émetteur, qui est toujours en mode implicite et continue d'envoyer des paquets implicites au récepteur. Un tel mode de réalisation permet de réduire l'intervalle de temps pendant lequel le récepteur et l'émetteur ne fonctionnent pas selon le même mode, de manière à optimiser le fonctionnement du système de transmission de données.

Selon une technique avantageuse, ledit mode explicite met en oeuvre un protocole du type ARQ (en anglais « Automatic Repeat Request »).

De manière avantageuse, ledit protocole du type ARQ appartient au groupe comprenant :
- des protocoles du type Go-Back-N ;
- des protocoles du type Selective Repeat ;
- des protocoles du type Stop-and-Wait.

L'invention s'applique bien sûr également à d'autres types de protocoles.

L'invention concerne également un système de transmission de données, échangées entre au moins un émetteur et au moins un récepteur, sous forme de paquets d'au moins une donnée, chacun desdits paquets de données étant associé à un identifiant dudit paquet.

Selon l'invention, un tel système comprend au moins deux modes de transmission :
- un mode explicite, dans lequel chacun desdits paquets de données, dits paquets explicites, est transmis avec ledit identifiant dudit paquet de données ;
- un mode implicite, dans lequel lesdits paquets de données, dits paquets implicites, sont transmis sans être accompagnés desdits identifiants,
et met en oeuvre des moyens de passage dudit mode explicite audit mode implicite et/ou des moyens de passage dudit mode implicite audit mode explicite, selon au moins un critère de passage prédéterminé. En outre, le récepteur d'un tel système gère au moins un indicateur de qualité de transmission, et le passage dudit récepteur dudit mode explicite audit mode implicite est déclenchée par la réception d'un paquet implicite, à condition que la valeur dudit au moins un indicateur soit supérieure à un seuil de qualité prédéterminé.

L'invention concerne encore un émetteur d'un système de transmission de données, du type permettant d'échanger des données avec au moins un récepteur, sous forme de paquets d'au moins une donnée, chacun desdits paquets de données étant associé à un identifiant dudit paquet.

Selon l'invention, un tel émetteur fonctionne selon au moins deux modes de transmission de données :
- un mode explicite, dans lequel chacun desdits paquets de données, dits paquets explicites, est transmis avec ledit identifiant dudit paquet de données ;
- un mode implicite, dans lequel lesdits paquets de données, dits paquets implicites, sont transmis sans être accompagnés desdits identifiants.

En outre, un tel émetteur comprend des moyens de passage dudit mode explicite audit mode implicite et/ou des moyens de passage dudit mode implicite audit mode explicite, selon au moins un critère de passage prédéterminé.

L'invention concerne également un récepteur d'un système de transmission de données, du type permettant d'échanger des données avec au moins un émetteur, sous forme de paquets d'au moins une donnée, chacun desdits paquets de données étant associé à un identifiant dudit paquet.

Selon l'invention, un tel récepteur fonctionne selon au moins deux modes de réception de données :
- un mode explicite, dans lequel chacun desdits paquets de données, dits paquets explicites, est transmis avec ledit identifiant dudit paquet de données ;
- un mode implicite, dans lequel lesdits paquets de données, dits paquets implicites, sont transmis sans être accompagnés desdits identifiants, et comprend des moyens de passage dudit mode explicite audit mode implicite et/ou des moyens de passage dudit mode implicite audit mode explicite, selon au moins un critère de passage prédéterminé.

En outre, un tel récepteur gère au moins un indicateur de qualité de transmission, et lesdits moyens de passage dudit mode explicite audit mode implicite sont déclenchés par la réception d'un paquet implicite, à condition que la valeur dudit au moins un indicateur soit supérieure à un seuil de qualité prédéterminé.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique du système de transmission de données selon l'invention ;
- la figure 2 illustre une machine d'états du récepteur du système de transmission de données présenté en figure 1 ;
- la figure 3 présente une première machine d'états de l'émetteur du système de transmission de données illustré en figure 1 ;
- la figure 4 illustre une seconde machine d'états de l'émetteur du système de transmission de données illustré en figure 1 ;
- les figures 5a à 5c décrivent les variables maintenues par l'émetteur et le récepteur du système de la figure 1 lorsqu'ils mettent en oeuvre un protocole de type ARQ ;
- la figure 6 présente un exemple de mode de réalisation d'une transition du mode implicite au mode explicite ;
- la figure 7 illustre un exemple de fonctionnement du système de la figure 1 en mode implicite.

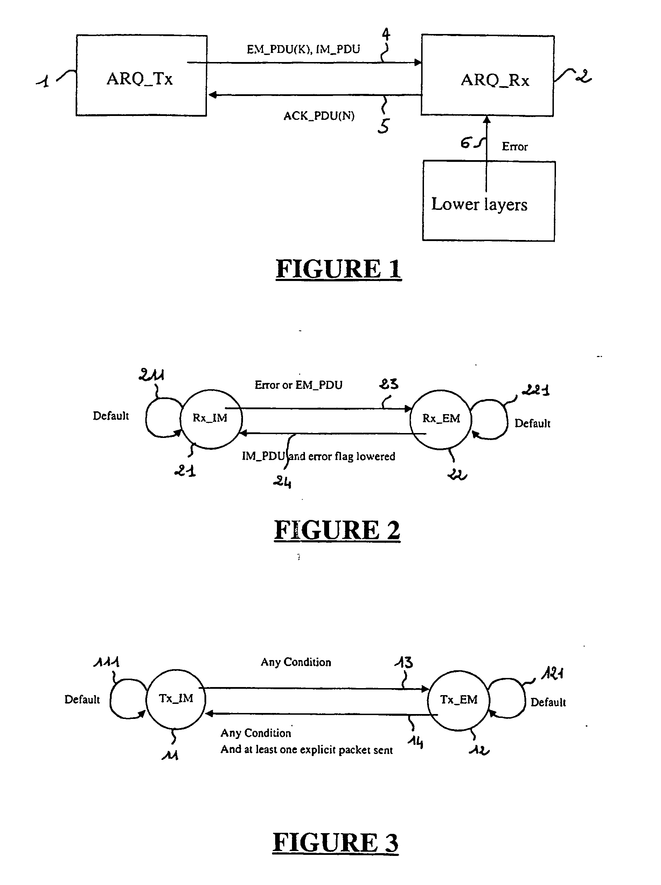

Par souci de simplification, on suppose dans l'ensemble des figures 1 à 7 qu'un identifiant d'un paquet de données est un numéro de séquence. L'invention s'applique bien sûr également aux autres types d'identifiants, tels qu'une chaîne de caractères par exemple.

Le principe général de l'invention repose sur l'existence de deux modes de transmission de données, un mode explicite dans lequel les paquets de données sont transmis avec leur identifiant, et un mode implicite dans lequel les paquets sont transmis sans identifiant. Un fonctionnement optimal du système est atteint lorsque l'émetteur et le récepteur sont sensiblement synchronisés, c'est-à-dire lorsque la durée des périodes pendant lesquelles l'émetteur et le récepteur ne fonctionnent pas selon le même mode de transmission est sensiblement réduite. Un tel fonctionnement optimal est notamment atteint par la gestion, côté récepteur, d'un indicateur de qualité de transmission, dont la valeur conditionne le passage du récepteur du mode explicite au mode implicite.

On notera que l'invention s'applique plus particulièrement, mais non limitativement, au cas des systèmes de transmission complexes de type asynchrone. On rappelle que par système asynchrone, on entend un système dans lequel l'émission de paquets de données utiles par un émetteur et celle de paquets de contrôle (acquittement) associés par un récepteur est asynchrone. De tels systèmes peuvent mettre en oeuvre des connexions unidirectionnelles ou bidirectionnelles entre un point d'accès et un terminal ou entre deux terminaux distants, les mécanismes d'émission de paquets de données utiles par un émetteur et de celle de paquets de contrôle associés par un récepteur étant généralement décorrélés dans de tels systèmes.

Par conséquent, les mécanismes de l'invention décrits en relation avec les figures 1 à 7 ci-dessous fonctionnent, dans le cas de tels systèmes asynchrones, à la seule condition que le récepteur soit bien informé à chaque fois qu'une erreur de transmission se produit sur le lien physique.

Dans de tels systèmes asynchrones, l'intervalle de temps qui sépare l'émission d'un paquet de données et la réception par le terminal émetteur d'un paquet de contrôle contenant l'acquittement ou le non-acquittement du paquet de données émis peut être très variable. Cette variabilité est encore accrue dans le cas de flux élastiques. En effet, on rappelle que l'émission de messages d'acquittements par le récepteur peut être différée, par exemple jusqu'à la réception d'un certain nombre de paquets, afin d'émettre un message d'acquittement cumulé. Par ailleurs, le récepteur peut différer l'émission d'un message d'acquittement jusqu'à ce qu'il se voit allouer les ressources nécessaires.

En raison de cette variabilité, il est donc particulièrement complexe de déterminer quand passer d'un mode implicite à un mode explicite, et inversement. Comme indiqué précédemment, l'invention envisage de lever cette difficulté à l'aide d'un indicateur de qualité de transmission géré par le récepteur. On notera que dans la suite de la description, un tel indicateur est présenté sous la forme d'un drapeau d'erreur.

On présente, en relation avec la figure 1, un mode de réalisation d'un système de transmission de données selon l'invention.

Un tel système de transmission de données comprend un émetteur 1 et un récepteur 2. L'émetteur 1 envoie des paquets de données au récepteur 2 par la liaison 4: ces paquets de données peuvent être des paquets explicites EM_PDU(K), contenant l'identifiant K du paquet transmis, ou des paquets de données implicites IM_PDU. Le récepteur 2 transmet à l'émetteur 1 des messages d'acquittement ACK_PDU(N) contenant l'identifiant N du prochain paquet de données attendu par le récepteur 2.

Le récepteur 2 peut envoyer de tels messages d'acquittement après avoir reçu et traité un paquet de données envoyé par l'émetteur 1, ou à tout autre instant, notamment à un instant déterminé par le protocole de transmission de données mis en oeuvre dans le système de la figure 1.

Les couches basses 3 du système envoient des messages d'erreur au récepteur 2 par l'intermédiaire d'une liaison 6. De tels messages d'erreurs permettent notamment d'informer le récepteur 2 qu'une erreur de transmission s'est produite au cours de l'échange d'informations entre l'émetteur 1 et le récepteur 2. La technique mise en oeuvre par les couches basses 3 pour détecter de telles erreurs de transmission ne fait pas l'objet de la présente demande.

Par souci de simplification, on affecte, dans les figures suivantes, les mêmes numéros aux éléments identiques.

On présente désormais, en relation avec la liaison 2, une machine d'états du récepteur 2, illustrant les conditions de transition du mode implicite 21 (respectivement explicite 22) au mode explicite 22 (respectivement implicite 21).

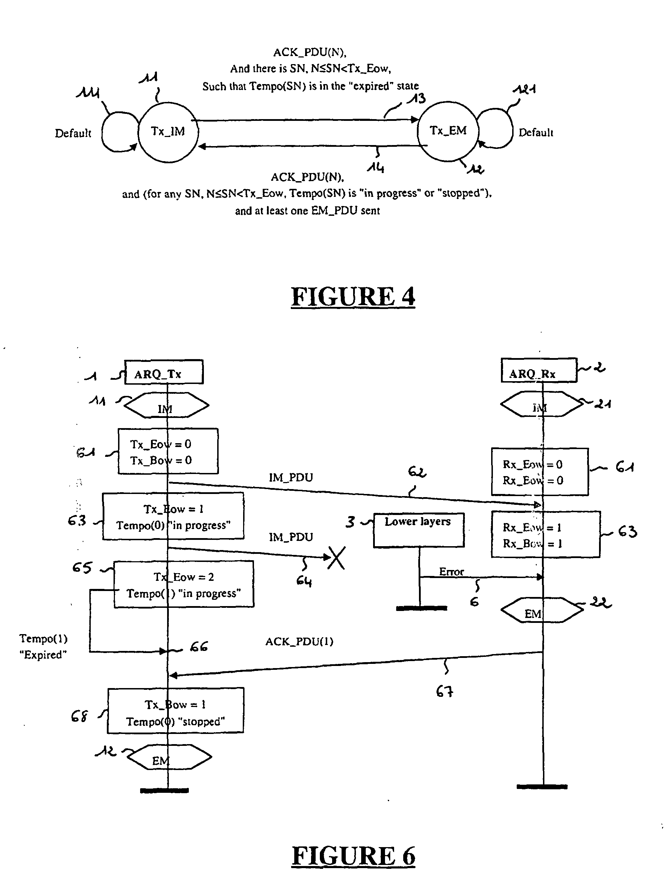

Le récepteur 2 peut fonctionner en mode implicite 21 ou en mode explicite 22. La transition 23 du mode implicite 21 au mode explicite 22 peut être déclenchée par la réception d'un message d'erreur provenant des couches basses 3, non illustrées en figure 2, ou par la réception d'un paquet de données explicite EM_PDU en provenance de l'émetteur 1. Si le récepteur 2 ne reçoit ni paquet explicite, ni message d'erreur, il reste en mode de fonctionnement implicite, comme illustré par la flèche référencée 211.

La transition 24 du mode explicite 22 au mode implicite 21 peut être déclenchée par la réception d'un paquet de données implicite IM_PDU, à condition que le drapeau d'erreur soit dans l'état abaissé.

Si le récepteur 2 ne reçoit pas de paquet implicite, ou si le drapeau d'erreur est levé à la réception d'un paquet implicite, le récepteur 2 reste en mode de fonctionnement explicite, ainsi que représenté par la flèche référencée 221.

La figure 3 illustre une première machine d'états de l'émetteur 1, présentant les conditions de transition du mode implicite 11 (respectivement explicite 12) au mode explicite 12 (respectivement implicite 11).

Le passage 13 du mode implicite 11 au mode explicite 12 de l'émetteur 1 peut être déclenché par tout événement interne et/ou externe à l'émetteur 1. Par défaut, l'émetteur 1 reste dans l'état implicite 11, comme illustré par la flèche référencée 111.

De même, le passage 14 du mode explicite 12 au mode implicite 11 peut être déclenché par un événement interne et/ou externe à l'émetteur 1, à condition qu'au moins un paquet explicite ait été envoyé par l'émetteur 1 depuis la dernière transition 13 du mode implicite au mode explicite. Un tel événement interne et/ou externe à l'émetteur peut être, par exemple, déterminé par le protocole de transmission de données mis en oeuvre dans un tel système de transmission de données selon l'invention. Par défaut, l'émetteur 1 reste en mode de fonctionnement explicite 12, comme illustré par la flèche référencée 121.

On présente désormais, en relation avec la figure 4, une seconde machine d'états de l'émetteur 1, illustrant des conditions de transition plus détaillées d'un mode implicite 11 (respectivement explicite 12) à un mode explicite 12 (respectivement implicite 11). Une telle machine d'états peut notamment être obtenue, selon l'invention, lorsque le système de transmission de données, illustré en figure 1, met en oeuvre un protocole de type ARQ.

La transition 13 du mode implicite 11 au mode explicite 12 est, dans ce mode de réalisation particulier, déclenché par la réception d'un message d'acquittement contenant l'identifiant N, ACK_PDU(N), à condition que l'émetteur 1 ait envoyé au moins un paquet d'identifiant SN, tel que N≤SN<Tx_Eow, dont l'horloge est dans l'état "expirée". (On rappelle que Tx_Eow est l'identifiant du prochain paquet de données à transmettre). En effet, une telle condition signale à l'émetteur 1 une erreur de transmission, car, en fonctionnement normal, l'horloge du paquet d'identifiant SN étant "expirée", l'émetteur 1 aurait déjà dû recevoir un message d'acquittement du récepteur 2, indiquant que ce paquet a été correctement reçu.

La transition 14 du mode explicite 12 au mode implicite 11 est, dans le mode de réalisation illustré en figure 4, déclenché par la réception d'un message d'acquittement contenant l'identifiant N, ACK_PDU(N), à condition que l'émetteur ait envoyé au moins un paquet explicite EM_PDU depuis la dernière transition 13 du mode implicite 11 au mode explicite 12, d'une part, et que l'horloge de chacun des paquets de données d'identifiant SN envoyés par l'émetteur 1, avec N≤SN<Tx_Eow, soit dans l'état "en cours" ou dans l'état "stoppée", d'autre part. En effet, de telles conditions signalent à l'émetteur 1 que tous les paquets de données envoyés plus d'un RTT avant la réception du message d'acquittement ACK_PDU(N) ont été correctement reçus. L'émetteur 1 peut donc passer en mode implicite 11, car la liaison entre l'émetteur 1 et le récepteur 2 ne semble pas perturbée.

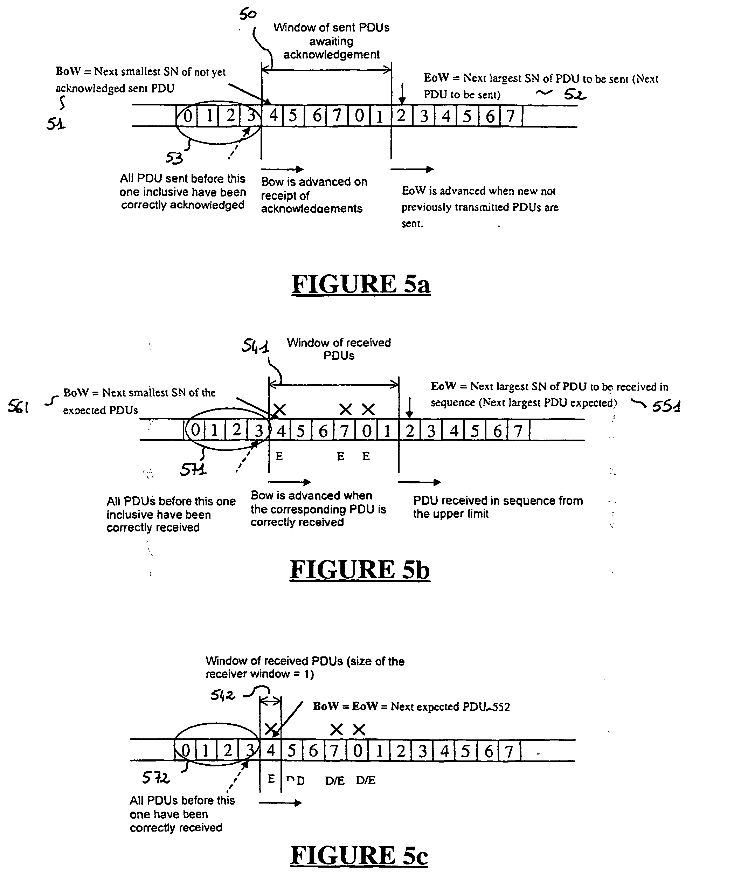

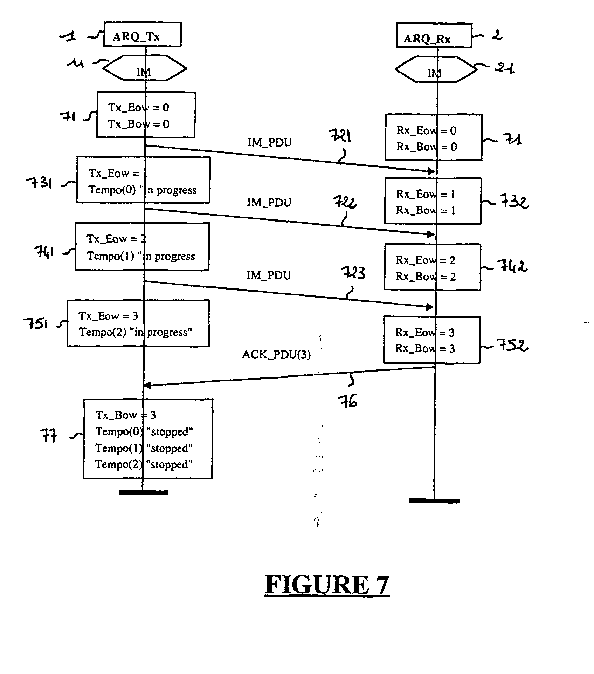

On présente désormais, en relation avec les figures 5a à 5c des définitions de variables utilisées dans les figures 6 et 7, et maintenues par l'émetteur 1 et le récepteur 2 lorsqu'ils mettent en oeuvre un protocole de type ARQ. On notera que ces définitions peuvent différer des définitions utilisées dans d'autres types de protocoles ARQ.

La figure 5a présente la définition des notions de fenêtre 50, de bas de fenêtre 51 BoW (en anglais "Bottom of Window") et de fin de fenêtre 52 EoW (en anglais "End of Window") pour l'émetteur 1.

Dans l'exemple illustré en figure Sa, les paquets de données du groupe 53 ont été envoyés par l'émetteur 1, et acquittés par le récepteur 2, c'est-à-dire que l'émetteur 1 a reçu au moins un message d'acquittement, indiquant que les paquets de données d'identifiant inférieur ou égal à 3 ont été correctement reçus.

Les paquets de données de la fenêtre 50 (c'est-à-dire les paquets de données d'identifiant n°4, 5, 6, 7, 0, et 1) ont été envoyés par l'émetteur 1 au récepteur 2, mais sont en attente d'acquittement, c'est-à-dire que l'émetteur 1 n'a pas encore reçu de message d'acquittement, lui indiquant que ces paquets de données avaient été correctement ou mal reçus.

Le premier paquet de données de la fenêtre 50, qui porte l'identifiant n°4 est défini comme le bas de fenêtre 51, appelé Bow, qui correspond au plus petit identifiant de paquet envoyé, mais non encore acquitté. La variable BoW est avancée à la réception d'un message d'acquittement contenant l'identifiant n°4 en provenance du récepteur 2.

L'identifiant du premier paquet de données suivant le dernier paquet de données de la fenêtre 50 est défini comme la fin de fenêtre 52, appelée EoW. Sur l'exemple de la figure 5a, EoW correspond à l'identifiant du paquet n°2. Eow est l'identifiant du prochain paquet que l'émetteur 1 doit transmettre, et il est avancé lorsque de nouveaux paquets de données non précédemment transmis sont envoyés.

La figure 5b présente les notions de fenêtre, de bas de fenêtre BoW (en anglais "Bottom of Window") et de fin de fenêtre EoW (en anglais "End of Window") pour le récepteur 2, lorsqu'il met en oeuvre un protocole ARQ du type Selective Repeat.

Le récepteur 2 maintient une fenêtre 541 de six paquets de données correspondant aux paquets de données reçus. Sur l'exemple de la figure 5b, les paquets d'identifiant n°5, 6, et 1 de la fenêtre 541 ont été correctement reçus, et une erreur est survenue au cours de la transmission des paquets d'identifiant n°4, 7 et 0 de la fenêtre 541. Tous les paquets de données du groupe 571 ont été correctement reçus par le récepteur 2.

On définit la variable de bas de fenêtre 561, BoW, comme le plus petit identifiant (modulo 8 dans l'exemple de la figure 5c) des paquets de données attendus par le récepteur 2. Bow est l'identifiant du premier paquet de données de la fenêtre 541, c'est-à-dire l'identifiant du paquet n°4 dans l'exemple de la figure 5b. À la réception du paquet d'identifiant n°4, BoW sera avancé, et prendra la valeur 7, le prochain paquet de données attendu par le récepteur 2 étant alors le paquet d'identifiant n°7.

On définit la variable de fin de fenêtre EoW 551 comme l'identifiant du prochain paquet de données attendu en séquence par le récepteur 2. C'est l'identifiant du paquet de données qui suit le dernier paquet de la fenêtre 541, c'est-à-dire l'identifiant du paquet n°2 sur l'exemple de la figure 5b.

La figure 5c présente les notions de fenêtre, de bas de fenêtre BoW (en anglais "Bottom of Window") et de fin de fenêtre EoW (en anglais "End of Window") pour le récepteur 2, lorsqu'il met en oeuvre un protocole ARQ du type Go-Back-N.

Sur cet exemple, le récepteur 2 maintient une fenêtre 542 qui contient un seul paquet de données, à savoir le paquet d'identifiant n°4, pour lequel une erreur de transmission est survenue. Par la suite, le récepteur 2 a reçu les paquets d'identifiant n°5 et 6, qu'il a rejetés, et les paquets d'identifiant n°7 et 0, pour lesquels une erreur de transmission s'est produite. Tous les paquets de données du groupe référencé 572 ont, par ailleurs, été correctement reçus par le récepteur 2.

On définit les variables 552 de bas de fenêtre BoW et de fin de fenêtre EoW comme l'identifiant du prochain paquet de données attendu par le récepteur 2. Sur l'exemple de la figure 5c, BoW=EoW=4, car le prochain paquet de données attendu par le récepteur 2 est le paquet d'identifiant n°4, pour lequel une erreur de transmission s'était produite.

La figure 6 illustre, en fonctionnement, un exemple de passage d'un mode implicite à un mode explicite du système de la figure 1, mettant en oeuvre un protocole de type ARQ.

L'émetteur 1 et le récepteur 2 sont en mode implicite 11, 21. À un instant référencé 61, pour l'émetteur 1, EoW=BoW=0, et, pour le récepteur 2, EoW=BoW=0. Le prochain paquet transmis par l'émetteur 1 sera donc le paquet de numéro de séquence 0, et le prochain paquet attendu par le récepteur 2 est également le paquet d'identifiant n°0.

Au cours d'une étape référencée 62, l'émetteur 1 envoie un paquet de données implicite au récepteur 2, qui le reçoit correctement.

À l'instant référencé 63, pour l'émetteur 1, la variable EoW prend la valeur 1, indiquant que le prochain paquet de données envoyé par l'émetteur 1 sera le paquet de numéro de séquence n°1. L'horloge du paquet n°0 est dans l'état "en cours". Pour le récepteur 2, les variables EoW et BoW prennent la valeur 1, indiquant que le prochain paquet de données attendu par le récepteur 2 est le paquet d'identifiant n° 1.

Au cours d'une étape référencée 64, l'émetteur 1 envoie le paquet de données implicite n°1 au récepteur 2. Les couches basses 3 envoient par la liaison 6 un message d'erreur au récepteur 2, pour lui signaler qu'une erreur de transmission s'est produite. Le récepteur 2, sur réception du message d'erreur, passe alors en mode explicite 22.

À l'instant référencé 65, qui suit l'émission du paquet d'identifiant n°1, la variable EoW de l'émetteur 1 prend la valeur 2, indiquant que le prochain paquet de données envoyé par l'émetteur 1 sera le paquet d'identifiant n°2. L'horloge du paquet d'identifiant n°1 est dans l'état "en cours". Après un temps maximum prédéterminé (égal au RTT par exemple), l'horloge du paquet d'identifiant n°1 passe dans l'état "expirée" à l'instant référencé 66.

Après être passé en mode explicite 22, le récepteur 2 envoie, au cours d'une étape référencée 67, un message d'acquittement contenant l'identifiant n°1, ACK_PDU(1), afin de signaler à l'émetteur 1 que le prochain paquet de données attendu par le récepteur 2 est le paquet d'identifiant n°1, indiquant ainsi qu'il s'est produit une erreur au cours de la transmission de ce paquet.

L'émetteur 1 reçoit ce message d'acquittement après l'expiration de l'horloge du paquet d'identifiant n°1. À l'instant référencé 68, la variable BoW de l'émetteur 1 est telle que BoW=1, car l'émetteur 1 est toujours en attente de l'acquittement du paquet d'identifiant n°1. L'horloge du paquet d'identifiant n°0 passe dans l'état "stoppée" sur réception du message d'acquittement ACK_PDU(1).

De telles conditions indiquent à l'émetteur 1 qu'il s'est produit une erreur de transmission, et il passe donc en mode explicite 12.

On présente désormais, en relation avec la figure 7, un exemple de fonctionnement du système de transmission de la figure 1 en mode implicite, lorsqu'il met en oeuvre un protocole de type ARQ.

L'émetteur 1 et le récepteur 2 sont en mode implicite 11, 21. Du côté de l'émetteur 1, à l'instant référencé 71, EoW=BoW=0, indiquant que le prochain paquet de données envoyé par l'émetteur 1 sera le paquet de n°0. Du côté du récepteur 2, EoW=BoW=0, indiquant que le récepteur 2 attend le paquet d'identifiant n°0. L'émetteur 1 et le récepteur 2 sont donc en phase, et le mode implicite est adapté à la transmission des données.

Au cours d'une étape référencée 721, l'émetteur 1 transmet au récepteur 2 le paquet implicite d'identifiant n°0. À l'instant référencé 731, il avance alors la variable EoW à 1, indiquant ainsi que le prochain paquet de données envoyé sera le paquet d'identifiant n°1, et il fait passer l'horloge du paquet d'identifiant n°0, Tempo(0), dans l'état "en cours".

Lorsqu'il reçoit correctement le paquet implicite d'identifiant n°0, à l'instant référencé 732, le récepteur 2 met à jour les variables EoW=BoW=1, indiquant que le prochain paquet attendu est le paquet d'identifiant n°1.

Au cours d'une étape référencée 722, l'émetteur 1 transmet au récepteur 2 le paquet implicite d'identifiant n°1. À l'instant référencé 741, il avance alors la variable EoW à 2, indiquant ainsi que le prochain paquet de données envoyé sera le paquet d'identifiant n°2, et fait passer l'horloge du paquet d'identifiant n°1, Tempo(1), dans l'état "en cours".

Lorsqu'il reçoit correctement le paquet implicite d'identifiant n°1, à l'instant référencé 742, le récepteur 2 met à jour les variables EoW=BoW=2, indiquant que le prochain paquet attendu est le paquet d'identifiant n°2.

À nouveau, au cours d'une étape référencée 723, l'émetteur 1 envoie le paquet implicite n°2. À l'instant référencé 751, EoW prend la valeur 3, indiquant que l'émetteur s'apprête à envoyer le paquet d'identifiant n°3, et l'horloge Tempo(2) passe dans l'état "en cours".

À la réception du paquet implicite d'identifiant n°3, à l'instant référencé 752, le récepteur incrémente EoW et BoW à 3, indiquant qu'il attend le paquet d'identifiant n°3. Il envoie alors, au cours d'une étape référencée 76, un message d'acquittement ACK_PDU(3), pour indiquer à l'émetteur 1 que tous les paquets d'identifiant inférieur ou égal à 2 ont été correctement reçus.

À la réception de ce message d'acquittement, à l'instant référencé 77, l'émetteur 1 met à jour la variable BoW, qui prend la valeur 3, car le prochain paquet de données en attente d'acquittement est le paquet d'identifiant n°3. Les horloges Tempo(0), Tempo(1), et Tempo(2) des paquets d'identifiant n°0, 1 et 2 passent dans l'état "stoppée", car ces paquets ont été correctement acquittés par le récepteur 2.

L'invention décrite dans ce document peut notamment être utilisée dans le cadre de la couche DLC (contrôle de liaison de données, en anglais "Data Link Control") des réseaux Hiperlan 2 (cf. ETSI TS 101 761-1, v1.1.1). Des messages d'erreur sont envoyés par la sous-couche MAC (en anglais "Medium Access Control") vers la sous-couche de contrôle d'erreur lorsque le FCCH (en anglais "Frame Control Channel") n'est pas correctement décodé, ou lorsque un paquet de données utilisateur attendu (LCH, en anglais "Long Transport Channel") n'est pas correctement décodé.

Les deux combinaisons réservées à un usage futur du champ "LCH PDU Type" des paquets de données LCH sont utilisées dans cette invention pour différencier les paquets de données explicites des paquets de données implicites.

## Revendications

1. Procédé de transmission de données entre au moins un émetteur (1) et au moins un récepteur (2), sous forme de paquets d'au moins une donnée, chacun desdits paquets de données étant associé à un identifiant dudit paquet,
**caractérisé en ce qu'**il met en oeuvre au moins deux modes de transmission :
- un mode explicite (12 ; 22), dans lequel chacun desdits paquets de données, dits paquets explicites, est transmis avec ledit identifiant dudit paquet de données ;
- un mode implicite (11; 21), dans lequel lesdits paquets de données, dits paquets implicites, sont transmis sans être accompagnés desdits identifiants ;
et **en ce qu'**il comprend au moins une étape de passage (24 ; 14) dudit mode explicite audit mode implicite et/ou au moins une étape de passage (23 ; 13) dudit mode implicite audit mode explicite, en fonction d'au moins un critère de passage prédéterminé,
et **en ce que** ledit récepteur gère au moins un indicateur de qualité de transmission, le passage dudit récepteur dudit mode explicite audit mode implicite étant déclenché par la réception d'un paquet implicite, à condition que la valeur dudit au moins un indicateur soit supérieure à un seuil de qualité prédéterminé.

2. Procédé selon la revendication 1, **caractérisé en ce que** ledit au moins un indicateur de qualité de transmission est un drapeau d'erreur relatif à ladite transmission de données.

3. Procédé selon la revendication 2, **caractérisé en ce que** ledit drapeau d'erreur peut prendre au moins deux états :
- un état « levé » après que ledit récepteur (2) reçoit un message d'erreur, ledit état "levé" signifiant que la condition selon laquelle la valeur dudit au moins un indicateur est supérieure audit seuil de qualité prédéterminé n'est pas vérifiée ;
- un état « abaissé » après que ledit récepteur reçoit correctement un paquet explicite, ledit état "abaissé" signifiant que la condition selon laquelle la valeur dudit indicateur est supérieure audit seuil de qualité prédéterminé est vérifiée.

4. Procédé selon l'une quelconque des revendications 1 à 3, **caractérisé en ce que** le passage dudit récepteur (2) dudit mode implicite audit mode explicite (23) est déclenché par la réception d'un paquet explicite et/ou d'un message d'erreur.

5. Procédé selon l'une quelconque des revendications 1 à 4, **caractérisé en ce que** ledit récepteur (2) maintient en outre au moins l'une des variables appartenant au groupe comprenant :
- des variables (561, 551 ; 572, 552) relatives auxdits identifiants desdits paquets reçus ;
- des variables d'état relatives à un protocole mis en oeuvre.

6. Procédé selon l'une quelconque des revendications 3 à 5, **caractérisé en ce que**, ledit récepteur (2) étant en mode explicite (22), ledit drapeau d'erreur étant levé, ledit récepteur refuse tous les paquets implicites reçus.

7. Procédé selon l'une quelconque des revendications 3 à 5, **caractérisé en ce que**, ledit récepteur (2) étant en mode explicite (22) et recevant au moins un paquet implicite, ledit drapeau d'erreur étant levé, ledit récepteur met en oeuvre les étapes successives suivantes :
- ledit récepteur stocke, selon un ordre de stockage séquentiel, ledit au moins un paquet implicite reçu ;
- si ledit drapeau d'erreur reste dans l'état « levé », ledit récepteur rejette ledit au moins un paquet implicite stocké ;
- si ledit drapeau d'erreur passe dans l'état « abaissé », ledit récepteur traite ledit au moins un paquet implicite stocké, et lui attribue l'identifiant qui précède séquentiellement ledit identifiant dudit paquet explicite reçu, s'il s'agit du premier paquet implicite stocké, ou l'identifiant qui précède séquentiellement l'identifiant du paquet implicite précédemment stocké selon ledit ordre de stockage séquentiel.

8. Procédé selon l'une quelconque des revendications 1 à 7, **caractérisé en ce que** ledit récepteur (2) ayant correctement reçu un paquet de données, il envoie audit émetteur (1) au moins un message d'acquittement classique dudit paquet reçu, contenant ledit identifiant dudit prochain paquet de données attendu par ledit récepteur,
et **en ce que**, dans au moins certains cas, ledit récepteur, préalablement audit envoi dudit au moins un message d'acquittement classique, envoie audit émetteur au moins un message d'acquittement anticipé.

9. Procédé selon l'une quelconque des revendications 1 à 8, **caractérisé en ce que** ledit émetteur (1) maintient au moins l'une des variables appartenant au groupe comprenant :
- des variables (51, 52) relatives aux identifiants d'au moins certains desdits paquets transmis ;
- pour chacun desdits paquets transmis, une horloge pouvant prendre au moins trois états :
- un état « en cours », après l'envoi dudit paquet transmis ;
- un état « stoppée », après la réception d'un message d'acquittement dudit paquet transmis ;
- un état « expirée », après un temps maximum prédéterminé ;
- des variables d'état relatives à un protocole mis en oeuvre.

10. Procédé selon l'une quelconque des revendications 1 à 9, **caractérisé en ce que** le passage (14) dudit émetteur (1) dudit mode explicite (12) audit mode implicite (11) est déclenché par un événement interne et/ou externe audit émetteur, si au moins un paquet explicite a été envoyé par ledit émetteur depuis le dernier passage dudit émetteur dudit mode implicite audit mode explicite.

11. Procédé selon l'une quelconque des revendications 1 à 10, **caractérisé en ce que** ledit émetteur maintient en outre au moins l'une des variables appartenant au groupe comprenant :
- une première variable d'identification (52), appelée EoW, dont la valeur est un identifiant dudit prochain paquet à transmettre ;
- une seconde variable d'identification (51), appelée BoW, dont la valeur est le plus petit desdits identifiants desdits paquets transmis, pour lesquels ledit émetteur n'a pas reçu de message d'acquittement, ledit identifiant étant un numéro, attribué séquentiellement à chacun desdits paquets de données.

12. Procédé selon les revendications 9 et 10, et éventuellement selon la revendication 11, **caractérisé en ce que** ledit identifiant est un numéro, attribué séquentiellement à chacun desdits paquets de données,
et **en ce que** ledit événement est constitué de la combinaison des conditions suivantes :
- ledit émetteur reçoit un message d'acquittement contenant l'identifiant N dudit prochain paquet de données attendu par ledit récepteur ;
- ladite horloge de chacun desdits paquets d'identifiants SN transmis par ledit émetteur est soit dans ledit état « en cours », soit dans ledit état « stoppée », SN étant supérieur ou égal à N, et SN étant strictement inférieur à l'identifiant dudit prochain paquet à transmettre (EoW).

13. Procédé selon la revendication 9, et éventuellement selon l'une quelconque des revendications 10 à 12, **caractérisé en ce que** ledit identifiant est un numéro, attribué séquentiellement à chacun desdits paquets de données,
et **en ce que** le passage (13) dudit émetteur (1) dudit mode implicite (11) audit mode explicite (12) est déclenché par la réception d'un message d'acquittement contenant l'identifiant N dudit prochain paquet de données attendu par ledit récepteur, si les deux conditions suivantes sont vérifiées :
- ledit émetteur a transmis au moins un paquet d'identifiant SN, avec SN supérieur ou égal à N, et SN strictement inférieur à l'identifiant dudit prochain paquet à transmettre ;
- ladite horloge de l'un au moins desdits paquets d'identifiant SN est dans ledit état « expirée ».

14. Procédé selon les revendications 9 et 11, et éventuellement selon la revendication 12, **caractérisé en ce que** ledit identifiant est un numéro, attribué séquentiellement à chacun desdits paquets de données,
et **en ce que** le passage (13) dudit émetteur (1) dudit mode implicite (11) audit mode explicite (12) est déclenché par le passage de ladite horloge d'un paquet d'identifiant SN dans ledit état « expirée », SN étant supérieur ou égal à ladite seconde variable d'identification BoW, et strictement inférieur à ladite première variable d'identification EoW.

15. Procédé selon l'une quelconque des revendications 1 à 14, **caractérisé en ce que** ledit mode explicite met en oeuvre un protocole du type ARQ.

16. Procédé selon la revendication 15, **caractérisé en ce que** ledit protocole du type ARQ appartient au groupe comprenant :
- des protocoles du type Go-Back-N ;
- des protocoles du type Selective Repeat ;
- des protocoles du type Stop-and-Wait.

17. Système de transmission de données, échangées entre au moins un émetteur (1) et au moins un récepteur (2), sous forme de paquets d'au moins une donnée, chacun desdits paquets de données étant associé à un identifiant dudit paquet,
**caractérisé en ce qu'**il comprend au moins deux modes de transmission :
- un mode explicite (12 22), dans lequel chacun desdits paquets de données, dits paquets explicites, est transmis avec ledit identifiant dudit paquet de données ;
- un mode implicite (11 ; 21), dans lequel lesdits paquets de données, dits paquets implicites, sont transmis sans être accompagnés desdits identifiants ;
et **en ce qu'**il met en oeuvre des moyens de passage (24 ; 14) dudit mode explicite audit mode implicite et/ou des moyens de passage (23 ; 13) dudit mode implicite audit mode explicite, en fonction d'au moins un critère de passage prédéterminé, et **en ce que** ledit récepteur gère au moins un indicateur de qualité de transmission, le passage dudit récepteur dudit mode explicite audit mode implicite étant déclenché par la réception d'un paquet implicite, à condition que la valeur dudit au moins un indicateur soit supérieure à un seuil de qualité prédéterminé.

18. Récepteur (2) d'un système de transmission de données, du type permettant d'échanger des données avec au moins un émetteur (1), sous forme de paquets d'au moins une donnée, chacun desdits paquets de données étant associé à un identifiant dudit paquet,
**caractérisé en ce qu'**il fonctionne selon au moins deux modes de réception de données :
- un mode explicite (22), dans lequel chacun desdits paquets de données, dits paquets explicites, est transmis avec ledit identifiant dudit paquet de données ;
- un mode implicite (21), dans lequel lesdits paquets de données, dits paquets implicites, sont transmis sans être accompagnés desdits identifiants ;
et **en ce qu'**il comprend des moyens de passage (24) dudit mode explicite audit mode implicite et/ou des moyens de passage (23) dudit mode implicite audit mode explicite, en fonction d'au moins un critère de passage prédéterminé,
et **en ce qu'**il gère au moins un indicateur de qualité de transmission,
lesdits moyens de passage dudit mode explicite audit mode implicite étant déclenchés par la réception d'un paquet implicite, à condition que la valeur dudit au moins un indicateur soit supérieure à un seuil de qualité prédéterminé.

## Patentansprüche

1. Übertragungsverfahren von Daten zwischen mindesten einem Sender (1) und mindestens einem Empfänger (2) in Form von Paketen mit mindestens einem Datenwert, wobei jedes dieser Datenpakete mit einem Kennzeichen des Datenpakets assoziiert ist,
**dadurch gekennzeichnet, dass** es mindestens zwei Formen des Sendens anwendet:
- eine explizite Form (12; 22), bei der jedes der "explizites Datenpaket" genannten Datenpakete zusammen mit dem Kennzeichen des Datenpakets gesendet wird;
- eine implizite Form (11; 21), bei der die "implizites Datenpaket" genannten Datenpakete ohne die erwähnten Kennzeichen gesendet werden;
**dadurch**, dass es mindestens einen Übergangsschritt (24; 14) von der expliziten Form in die implizite Form und/oder mindestens einen Übergangsschritt (23; 13) von der impliziten Form in die explizite Form umfasst, als Funktion von mindestens einem vorgegebenen Übergangskriterium,
und **dadurch**, dass der Empfänger mindestens einen Indikator für die Sendequalität verwaltet, wobei der Übergang dieses Empfängers von der expliziten Form in die implizite Form durch den Empfang eines impliziten Pakets ausgelöst wird, vorausgesetzt, der Wert des mindestens einen Indikators ist größer als ein vorgegebener Qualitätsschwellenwert.

2. Verfahren nach Anspruch 1,
**dadurch gekennzeichnet, dass** der mindestens eine Indikator für die Übertragungsqualität ein Fehler-Flag bezüglich der erwähnten Datenübertragung ist.

3. Verfahren nach Anspruch 2,
**dadurch gekennzeichnet, dass** das Fehler-Flag mindestens zwei Zustände annehmen kann:
- einen "high level" Zustand, nachdem der Empfänger (2) eine Fehlermeldung empfängt, wobei der "high level" Zustand bedeutet, dass die Bedingung, nach welcher der Wert dieses mindestens ein Indikator größer ist als der vorgegebene Qualitätsschwellenwert, nicht nachgewiesen ist;
- einen "low level" Zustand, nachdem der Empfänger ein explizites Paket ordnungsgemäß empfängt, wobei der "low level" Zustand bedeutet, dass die Bedingung, nach welcher der Wert dieses mindestens einen Indikators größer ist als der vorgegebene Qualitätsschwellenwert, nachgewiesen ist.

4. Verfahren nach einem der Ansprüche 1 bis 3,
**dadurch gekennzeichnet, dass** der Übergang des Empfängers (2) von der impliziten Form in die explizite Form (23) durch den Empfang eines expliziten Pakets und/oder einer Fehlermeldung ausgelöst wird.

5. Verfahren nach einem der Ansprüche 1 bis 4,
**dadurch gekennzeichnet, dass** der Empfänger (2) ferner mindestens eine der Variablen aus der folgendes umfassenden Gruppe aufrechterhält:
- Variablen (561, 551,; 572, 552) bezüglich der Kennzeichens der empfangenen Pakete;
- Variablen bezüglich eines eingesetzten Protokolls.

6. Verfahren nach einem der Ansprüche 3 bis 5,
**dadurch gekennzeichnet, dass**, weil der Empfänger (2) sich in der expliziten Form (22) befindet, wobei das Fehler-Flag sich im "high level" Zustand befindet, der Empfänger alle empfangenen impliziten Pakete ablehnt.

7. Verfahren nach einem der Ansprüche 3 bis 5,
**dadurch gekennzeichnet, dass**, weil der Empfänger (2) sich in der expliziten Form (22) befindet und mindestens ein implizites Paket empfängt, wobei das Fehler-Flag sich im "high level" Zustand befindet, dieser Empfänger die aufeinander folgenden Schritte einsetzt:
- der Empfänger speichert das mindestens eine empfangene implizite Paket nach einer aufeinander folgenden Speicherordnung;
- wenn das Fehler-Flag im "high level" Zustand bleibt, dann lehnt der Empfänger das mindestens eine gespeicherte implizite Pakte ab;
- wenn das Fehler-Flag in den "low level" Zustand übergeht, dann verarbeitet der Empfänger das mindestens eine gespeicherte implizite Paket und weist ihm das Kennzeichen zu, welches der Reihenfolge nach vor diesem Kennzeichen des empfangenen expliziten Pakets liegt, wenn es sich um das erste gespeicherte implizite Paket handelt, oder das Kennzeichen, welches der Reihenfolge nach vor diesem Kennzeichen des vorher nach der aufeinander folgenden Speicherordnung gespeicherten impliziten Pakets liegt.

8. Verfahren nach einem der Ansprüche 1 bis 7,
**dadurch gekennzeichnet, dass**, wenn der Empfänger (2) ein Datenpaket ordnungsgemäß empfangen hat, er dem Sender (1) mindestens eine klassische Bestätigungsmeldung für den Empfang des Pakets sendet, welche das Kennzeichen des nachfolgenden, von diesem Empfänger erwarteten Datenpakets, enthält und **dadurch**, dass zumindest in einigen Fällen, der Empfänger vor dem Senden der mindestens einen klassischen Bestätigungsmeldung, dem Sender mindestens eine voreilende Bestätigungsmeldung sendet.

9. Verfahren nach einem der Ansprüche 1 bis 8,
**dadurch gekennzeichnet, dass** der Sender (1) mindestens eine der Variablen aus der folgendes umfassenden Gruppe aufrechterhält:
- Variable (51, 52) bezüglich der Kennzeichen von mindestens einigen der erwähnten gesendeten Pakete;
- für jedes der gesendeten Pakete, einen Taktgeber, der mindestens drei Zustände einnehmen kann:
- einen "laufenden" Zustand, nach dem Senden des erwähnten gesendeten Pakets;
- einen "angehaltenen" Zustand nach Empfang einer Bestätigungsmeldung für das gesendete Paket;
- einen "abgelaufenen" Zustand, nach einer vorgegebenen Maximalzeit;
- Zustandsvariablen bezüglich eines eingesetzten Protokolls.

10. Verfahren nach einem der Ansprüche 1 bis 9,
**dadurch gekennzeichnet, dass** der Übergang (14) des Senders (1) von der expliziten Form (12) in die implizite Form (11) durch ein dem Sender gegenüber internes und/oder externes Ereignis ausgelöst wird, wenn mindestens ein explizites Paket von diesem Sender, seit dem letzten Übergang des Senders von der impliziten Form in die explizite Form, gesendet wurde.

11. Verfahren nach einem der Ansprüche 1 bis 10,
**dadurch gekennzeichnet, dass** der Sender ferner mindestens eine der Variablen aus der folgendes umfassenden Gruppe aufrechterhält:
- eine erste, EoW genannte Kennzeichnungsvariable (52), deren Wert ein Kennzeichen des nächsten zu senden Pakets ist;
- eine zweite, BoW genannte Kennzeichnungsvariable (51), deren Wert der kleinste dieser Kennzeichen der gesendeten Pakete ist, für welche der Sender keine Bestätigungsmeldung empfangen hat, wobei das Kennzeichen eine Zahl ist, die der Reihe nach jedem der erwähnten Datenpakete zugeordnet wird.

12. Verfahren nach einem der Ansprüche 9 oder 10 und gegebenenfalls nach Anspruch 11,
**dadurch gekennzeichnet, dass** das erwähnte Kennzeichen eine Zahl ist, die der Reihe nach einem jeden der erwähnten Datenpakete zugeordnet wird
und **dadurch**, dass das besagte Ereignis sich aus der Kombinierung der folgenden Bedingungen zusammensetzt:
- der Sender empfängt eine Bestätigungsmeldung, welche das Kennzeichen N des nachfolgenden vom Empfänger erwarteten Datenpakets enthält;
- der Taktgeber eines jeden der von diesem Sender gesendeten Pakets mit dem Kennzeichen SN befindet sich entweder im so genannten "laufenden" oder im so genannten "angehaltenen" Zustand, wobei SN größer oder gleich N ist und SN streng kleiner als das Kennzeichen des erwähnten nächsten zu sendenden Pakets (EoW) ist.

13. Verfahren nach Anspruch 9 und gegebenenfalls nach einem der Ansprüche 10 bis 12,
**dadurch gekennzeichnet, dass** das Kennzeichen eine der Reihe nach einem jeden der besagten Datenpakete zugeordnete Zahl ist
und **dadurch**, dass der Übergang (13) des Senders (1) von der impliziten Form (11) in die explizite Form (12) durch den Empfang einer Bestätigungsmeldung ausgelöst wird, welche das Kennzeichen N des nächsten vom Empfänger erwarteten Datenpakets enthält, wenn die zwei nachfolgenden Bedingungen erfüllt sind:
- der Sender hat mindestens ein Paket mit dem Kennzeichen SN gesendet, wobei SN größer oder gleich N und SN streng kleiner als das Kennzeichen des nächsten zu sendenden Pakets ist;
- der Taktgeber des mindestens einen Pakets mit dem Kennzeichen SN sich im "abgelaufenen" Zustand befindet.

14. Verfahren nach einem der Ansprüche 9 oder 11 und gegebenenfalls nach Anspruch 12,
**dadurch gekennzeichnet, dass** das Kennzeichen eine Zahl ist, die der Reihe nach einem jeden der Datenpakete zugeordnet wird
und **dadurch**, dass der Übergang (13) des Senders (1) von der impliziten Form (11) in die explizite Form (12) durch den Übergang des Taktgebers eines Paketes mit dem Kennzeichen SN in den "abgelaufenen" Zustand ausgelöst wird, wobei SN größer oder gleich der zweiten Variablen mit dem Kennzeichen BoW und streng kleiner als die erste Variable mit dem Kennzeichen EoW ist.

15. Verfahren nach einem der Ansprüche 1 bis 14,
**dadurch gekennzeichnet, dass** die explizite Form ein Protokoll vom Typ ARQ einsetzt.

16. Verfahren nach Anspruch 15,
**dadurch gekennzeichnet, dass** das Protokoll vom Typ ARQ der folgendes umfassenden Gruppe gehört:
- Protokolle des Typs Go-Back-N;
- Protokolle des Typs Selective Repeat;
- Protokolle des Typs Stop-and-Wait.

17. System zum Übertragen von Daten, die zwischen mindestens einem Sender (1) und einem Empfänger (2) in Form von Paketen mit mindestens einem Datenwert ausgetauscht werden, wobei jedes dieser Datenpakete mit einem Kennzeichen des Paktes assoziiert ist,
**dadurch gekennzeichnet, dass** es mindestens zwei Sendeformen umfasst:
- eine explizite Form (12; 22), bei der jede der "explizites Paket" genannten Datenpakete zusammen mit dem Kennzeichen des Datenpakets gesendet wird;
- eine implizite Form (11; 21), bei der jede der "implizites Paket" genannten Datenpakete ohne das Kennzeichen des Datenpakets gesendet wird;
**dadurch**, dass es Übergangsmittel (24; 14) von der expliziten Form in die implizite Form und/oder Übergangsmittel (23; 13) von der impliziten Form in die explizite Form einsetzt, als Funktion von mindestens einem vorgegebenen Übergangskriterium
und **dadurch**, dass der Empfänger mindestens einen Indikator für die Sendequalität verwaltet, wobei der Übergang dieses Empfängers von der expliziten Form in die implizite Form durch den Empfang eines impliziten Pakets ausgelöst wird, vorausgesetzt, der Wert des mindestens einen Indikators ist größer als ein vorgegebener Qualitätsschwellenwert.

18. Empfänger (2) eines Datenübertragungssystems, von der Art, die den Austausch von Daten mit mindestens einem Sender (1) in Form von Paketen mit mindestens einem Datenwert ermöglicht, wobei jedes dieser Datenpakete mit einem Kennzeichen des Paktes assoziiert ist,
**dadurch gekennzeichnet, dass** es nach mindestens zwei Formen des Datenempfangs funktioniert:
- eine explizite Form (22), bei der jede der "explizites Paket" genannten Datenpakete zusammen mit dem Kennzeichen des Datenpakets gesendet wird;
- eine implizite Form (21), bei der jede der "implizites Paket" genannten Datenpakete ohne das Kennzeichen des Datenpakets gesendet wird;
**dadurch**, dass es Übergangsmittel (24) von der expliziten Form in die implizite Form und/oder Übergangsmittel (23) von der impliziten Form in die explizite Form einsetzt, als Funktion von mindestens einem vorgegebenen Übergangskriterium
und **dadurch**, dass es mindestens einen Indikator für die Sendequalität verwaltet, wobei die Übergangsmittel von der expliziten Form in die implizite Form durch den Empfang eines impliziten Pakets ausgelöst werden, vorausgesetzt, der Wert des mindestens einen Indikators ist größer als ein vorgegebener Qualitätsschwellenwert.

## Claims

1. Method of transmitting data between at least one transmitter (1) and at least one receiver (2), in the form of packets of at least one data element, each of said data packets being associated with an identifier of said packet,
**characterized in that** said method employs at least two transmission modes:
- an explicit mode (12; 22), in which each of said data packets, termed explicit packets, is transmitted with said identifier of said data packet;
- an implicit mode (11; 21), in which said data packets, termed implicit packets, are transmitted without being accompanied by said identifiers;
and said method comprises at least one changeover stage (24; 14) from said explicit mode to said implicit mode and/or at least one changeover stage (23; 13) from said implicit mode to said explicit mode, according to at least one predetermined changeover criterion,
and said receiver manages at least one indicator of transmission quality, the changeover of said receiver from said explicit mode to said implicit mode being triggered by the receipt of an implicit packet, provided that the value of said at least one indicator is greater than a predetermined quality threshold.

2. Method according to claim 1, **characterized in that** said at least one indicator of transmission quality is an error flag relating to said data transmission.

3. Method according to claim 2, **characterized in that** said error flag is able to assume at least two states:
- a "raised" state, after which said receiver (2) receives an error message, said "raised" state signifying that the condition according to which the value of said at least one indicator is greater than said predetermined quality threshold is not verified;
- a "lowered" state, after which said receiver correctly receives an explicit packet, said "lowered" state signifying that the condition according to which the value of said indicator is greater than said predetermined quality threshold is verified.

4. Method according to any one of claims 1 to 3,
**characterized in that** the changeover of said receiver (2) from said implicit mode to said explicit mode (23) is triggered by the receipt of an explicit packet and/or of an error message.

5. Method according to any one of claims 1 to 4,
**characterized in that** said receiver (2) furthermore maintains at least one of the variables belonging to the group comprising:
- variables (561, 551; 572, 552) relating to said identifiers of said received packets;
- status variables relating to a protocol employed.

6. Method according to any one of claims 3 to 5,
**characterized in that**, said receiver (2) being in explicit mode (22), said error flag being raised, said receiver rejects all implicit packets received.

7. Method according to any one of claims 3 to 5,
**characterized in that**, said receiver (2) being in explicit mode (22) and receiving at least one implicit packet, said error flag being raised, said receiver employs the following successive stages:
- said receiver stores, according to a sequential storage order, said at least one received implicit packet;
- if said error flag remains in the "raised" state, said receiver rejects said at least one stored implicit packet;
- if said error flag changes to the "lowered" state, said receiver processes said at least one stored implicit packet, and allocates to it the identifier which sequentially precedes said identifier of said received explicit packet, if it is the first implicit packet to be stored, or the identifier which sequentially precedes the identifier of the implicit packet previously stored according to said sequential storage order.

8. Method according to any one of claims 1 to 7,
**characterized in that** said receiver (2), having correctly received a data packet, sends to said transmitter (1) at least one standard message acknowledging said received packet, containing said identifier of said next data packet expected by said receiver,
and, in at least some cases, said receiver, prior to said sending of said at least one standard acknowledgement message, sends to said transmitter at least one advance acknowledgement message.

9. Method according to any one of claims 1 to 8,
**characterized in that** said transmitter (1) maintains at least one of the variables belonging to the group comprising:
- variables (51, 52) relating to the identifiers of at least some of said transmitted packets;
- for some of said transmitted packets, a clock able to assume at least three states:
- a "running" state, following the sending of said transmitted packet;
- a "stopped" state, following the receipt of a message acknowledging said transmitted packet;
- an "expired" state, following a predetermined maximum time;
- status variables relating to a protocol employed.

10. Method according to any one of claims 1 to 9,
**characterized in that** the changeover (14) of said transmitter (1) from said explicit mode (12) to said implicit mode (11) is triggered by an event inside and/or outside said transmitter, if at least one explicit packet has been sent by said transmitter since the last changeover of said transmitter from said implicit mode to said explicit mode.

11. Method according to any one of claims 1 to 10,
**characterized in that** said transmitter furthermore maintains at least one of the variables belonging to the group comprising:
- a first identification variable (52), termed EoW, the value of which is an identifier of said next packet to be transmitted;
- a second identification variable (51), termed BoW, the value of which is the smallest of said identifiers of said transmitted packets for which said transmitter has not received an acknowledgement message, said identifier being a number allocated sequentially to each of said data packets.

12. Method according to claims 9 and 10, and possibly according to claim 11, **characterized in that** said identifier is a number allocated sequentially to each of said data packets,
and said event is constituted by the combination of the following conditions:
- said transmitter receives an acknowledgement message containing the identifier N of said next data packet expected by said receiver;
- said clock of each of said identifier packets SN transmitted by said transmitter is either in said "running" state or in said "stopped" state", SN being greater than or equal to N, and SN being strictly less than the identifier of said next packet to be transmitted (EoW).

13. Method according to claim 9, and possible according to any one of claims 10 to 12, **characterized in that** said identifier is a number allocated sequentially to each of said data packets,
and the changeover (13) of said transmitter (1) from said implicit mode (11) to said explicit mode (12) is triggered by the receipt of an acknowledgement message containing the identifier N of said next data packet expected by said receiver, if the following two conditions are verified:
- said transmitter has transmitted at least one identifier packet SN, with SN greater than or equal to N, and SN strictly less than the identifier of said next packet to be transmitted;
- said clock of at least one of said identifier packets SN is in said "expired" state.

14. Method according to claims 9 and 11, and possibly according to claim 12, **characterized in that** said identifier is a number allocated sequentially to each of said data packets,
and the changeover (13) of said transmitter (1) from said implicit mode (11) to said explicit mode (12) is triggered by the changeover of said clock of an identifier packet SN to said "expired" state, SN being greater than or equal to said second identification variable BoW, and strictly less than said first identification variable EoW.

15. Method according to any one of claims 1 to 14,
**characterized in that** said explicit mode employs an ARQ type protocol.

16. Method according to claim 15, **characterized in that** said ARQ type protocol belongs to the group comprising:
- Go-Back-N type protocols;
- Selective Repeat type protocols;
- Stop-and-Wait type protocols.

17. System for transmitting data, exchanged between at least one transmitter (1) and at least one receiver (2), in the form of packets of at least one data element, each of said data packets being associated with an identifier of said packet,
**characterized in that** said system comprises at least two transmission modes:
- an explicit mode (12; 22), in which each of said data packets, termed explicit packets, is transmitted with said identifier of said data packet;
- an implicit mode (11; 21), in which said data packets, termed implicit packets, are transmitted without being accompanied by said identifiers;
and said system employs means of changeover (24; 14) from said explicit mode to said implicit mode and/or means of changeover (23; 13) from said implicit mode to said explicit mode, according to at least one predetermined changeover criterion,
and said receiver manages at least one indicator of transmission quality, the changeover of said receiver from said explicit mode to said implicit mode being triggered by the receipt of an implicit packet, provided that the value of said at least one indicator is greater than a predetermined quality threshold.

18. Receiver (2) of a system for transmitting data, of the type enabling data to be exchanged with at least one transmitter (1), in the form of packets of at least one data element, each of said data packets being associated with an identifier of said packet,
**characterized in that** said receiver operates according to at least two data receiving modes:
- an explicit mode (22), in which each of said data packets, termed explicit packets, is transmitted with said identifier of said data packet;
- an implicit mode (21), in which said data packets, termed implicit packets, are transmitted without being accompanied by said identifiers;
and said receiver comprises means of changeover (24) from said explicit mode to said implicit mode and/or means of changeover (23) from said implicit mode to said explicit mode, according to at least one predetermined changeover criterion,,
and said receiver manages at least one indicator of transmission quality, said means of changeover from said explicit mode to said implicit mode being triggered by the receipt of an implicit packet, provided that the value of said at least one indicator is greater than a predetermined quality threshold.
